# EUROPEAN PATENT APPLICATION

(11) **EP 2 530 949 A1**
(43) Date of publication of application: **05.12.2012**
(21) Application number: 12003841.9
(22) Date of filing: 15.05.2012
(51) Int. Cl.: H04N 21/4405, H04N 21/432, H04W 12/02

(54) **Wireless transmission of protected content**

(30) Priority: 31.05.2011 US 201161491838 P; 21.12.2011 US 201113333894
(71) Applicant: Broadcom Corporation, Irvine, CA 92617 (US)
(72) Inventor: Kondareddy, Raghunatha, 94086 Sunnyvale, CA (US); Dougherty, James F., 95037 Morgan Hill, CA (US); Rajakaruanayake, Yasantha, 94582 Ramon, CA (US); McAlinden, Paul, 94550 Livermore, CA (US)
(74) Representative: Jehle, Volker Armin

(57) **Abstract**

Protected content from a media source is transmitted via a wireless link using modified wireless encryption keys. Content to be delivered under a content protection scheme, e.g. High-bandwidth Digital Content Protection (HDCP), from a media source to a media sink is received at a wireless communication device. A content protection key, or a digital rights management (DRM) key, associated with the media sink is used to generate DRM modified wireless encryption keys. These modified wireless encryption keys are used to encrypt the wireless transmission using wireless encryption techniques, such an advanced encryption standard (AES) protocol, and transmit the encrypted content over a wireless link. The DRM modified keys can be used, for example to seed a Wi-Fi Protected Access (WPA) encryption engine in place of other keys normally used in the wireless encryption process, thereby effectively integrating the DRM content protection scheme with standard wireless encryption and transmission.

## Description

### CROSS REFERENCE TO RELATED PATENTS

This application claims the benefit of U.S. Provisional Application No. 61/491,838, filed 05-31-2011, and entitled "Media Communications And Signaling Within Wireless Communication Systems," (Attorney Docket No. BP22744), which is incorporated herein in its entirety by reference for all purposes.

### STATEMENT REGARDING FEDERALLY SPONSORED RESEARCH OR DEVELOPMENT

NOT APPLICABLE.

### INCORPORATION-BY-REFERENCE OF MATERIAL SUBMITTED ON A COMPACT DISC

NOT APPLICABLE.

### BACKGROUND

### TECHNICAL FIELD

This invention relates generally to transmitting protected content, and more particularly to transmitting protected content via a wireless link.

### DESCRIPTION OF RELATED ART

Current technology allows near-perfect copies of digital content to be made, quickly and easily. While this ability is beneficial in many ways, it presents certain challenges to owners and distributors of copyrighted content that were not previously of great concern. For example, when copies of audio and video files were made using older analog technology, the copies were generally degraded sufficiently from the original version to make it worth the cost for consumers to purchase an original version. The lower quality of the copies also made it more difficult for those selling illegitimate copies of protected works to pass those copies off as originals. Copies made using current technology, however, can be difficult to distinguish from the original versions, making it easier for unscrupulous manufacturers to sell pirated copies of original works, and pass them off as originals.

Various technologies have arisen to make it more difficult for people to improperly access protected content, thereby decreasing the instances of casual copying and redistribution of protected works by consumers, as well as making it more difficult for pirated copies of protected works to be distributed. One of the ways in which protected content is shielded from unauthorized reproduction, is through the use of digital rights management schemes that require adherence to certain hardware and software standards that make copying protected content more difficult and inconvenient. One such content for section scheme is referred to as High-bandwidth Digital Content Protection (HDCP). In HDCP, content is transferred between devices using a key exchange protocol in which the source of the content verifies that the content sink, i.e. the receiving device, complies with the HDCP standard, and is therefore authorized to receive the content. Should the sink not be authorized to receive the content, the source device stops transmission of the content. In this way, hardware devices that do not follow the content protection standards set forth by the HDCP standard, are prevented from receiving protected content.

In general, when using HDCP and other similar content protection schemes in conjunction with wireless networks, the content to be protected is encoded by the content source using the HDCP encryption keys, the encoded content is delivered to a wireless transceiver, which treats the HDCP encoded content as a payload to be delivered via a wireless link. The wireless receiver at the other end of the wireless link uses normal wireless techniques to recover the payload, which is still encoded by the HDCP keys, and forwards the encoded payload to the sink, where the HDCP protected content is finally decoded and presented to an end-user.

In general, according to the HDCP standard, the HDCP encryption key is negotiated between the content source and the content sink, and is either a session key valid for an entire session, or a key that is changed about every 128 packets. Using a session key, or using a key that is changed only after transmission of 128 packets, does not provide for the highest level of security possible. Furthermore, the hardware or software engine in the source device must encrypt the protected content, thereby consuming significant processing resources. It is apparent from the above discussion, therefore, that currently available content protection schemes are less-than-perfect.

### BRIEF SUMMARY OF THE INVENTION

According to an aspect, a method is provided for use in transmitting protected content from a media source communicatively coupled to a media sink via a packetized wireless link, the method comprising:
receiving, at a first wireless communication device, content to be delivered from a media source to a media sink under a digital rights management (DRM) scheme;
receiving, via the wireless link, information allowing the first wireless communication device to determine a DRM key associated with the media sink;
using the DRM key to generate DRM modified wireless encryption keys;
transmitting the content via the packetized wireless link using the DRM modified wireless encryption keys.

Advantageously, the method further comprises:
receiving the content at the first wireless communication device in plaintext.

Advantageously, the method further comprises:
receiving, from a second wireless communication device via the wireless link, communications encoded using the DRM modified wireless encryption keys;
decoding communications received from the second wireless communication device using the DRM modified wireless encryption keys.

Advantageously, the method further comprises:
transmitting decoded content to the media source in plaintext.

Advantageously, the method further comprises:
exchanging DRM keys belonging to an originating media source device and an endpoint sink device using an established wireless link between a first wireless device coupled to the originating media source device and a second wireless device.

Advantageously, transmitting the content comprises:
employing advanced encryption standard (AES) encoding in conjunction with the DRM modified wireless encryption keys.

According to an aspect, a wireless transceiver comprises:
an input to receive, from a content source, content to be delivered to a sink in accordance with a content protection scheme, wherein the content is received at the input in plaintext;
a wireless interface configured to receive from the sink, via a packetized wireless link, information related to a content protection key of the sink;
a memory;
a processor operably coupled to the memory and configured to:
   use the information related to the content protection key of the sink to generate an encrypted version of the content for transmission over the packetized wireless link; and the wireless interface further configured to transmit the encrypted version of the content over the packetized wireless link.

Advantageously, the processor is further configured to:
determine whether content received from the source has been previously encrypted in accordance with the content protection scheme;
in response to a favorable determination, transmitting the content without applying further encryption.

Advantageously:
the wireless interface is further configured to receive, from another wireless transceiver, communications encrypted using wireless communication keys generated from the content protection key of the sink;
the processor is further configured to decoding the communications using wireless communication keys generated from the content protection key of the sink.

Advantageously, the wireless transceiver comprises the content source.

Advantageously, the wireless transceiver is a High Bandwidth Digital Content Protection (HDCP) compliant device, and is coupled to an external HDCP compliant content source.

Advantageously, the processor is further configured to:
determine the content protection key of the sink;
determine whether the content protection key of the sink has been revoked; and
prevent transmission of the content to the sink in response to determining that the content protection key of the sink has been revoked.

Advantageously, the processor further configured to:
use the content protection key of the sink as a seed to generate modified wireless encryption keys.

According to an aspect, a wireless transceiver is provided configured for use in a packetized network, the wireless transceiver comprising:
a wireless interface configured to receive, from a wireless transceiver coupled to a media source:
   information related to a digital rights management key (DRM) key; media content encrypted using wireless keys generated using information related to a DRM key;
   a memory;
   a processor operably coupled to the memory and configured to:
      generate DRM-related wireless encryption keys using the information related to the DRM key;
      decrypt the media content using the DRM-related wireless encryption keys; and an output to deliver decrypted media content to the media sink.

Advantageously, the processor is further configured to:
determine whether the media content can be decrypted using the DRM-related wireless encryption keys to obtain plaintext content;
in response to a favorable determination, transmitting the plaintext content without applying further decryption; and
in response to an unfavorable determination, decrypting the media content using the DRM key.

Advantageously:
the processor is further configured to generate encrypted outgoing communications using the DRM-related wireless communication keys; and
the wireless interface is further configured to transmit the encrypted outgoing communications to the wireless transceiver coupled to a media source.

Advantageously, the wireless transceiver further comprises the media sink.

Advantageously, the wireless transceiver is coupled to an external media sink.

Advantageously, the processor is further configured to:
determine a DRM key of the external sink;
determine whether the DRM key of the sink has been revoked; and
prevent transmission of media content to the sink in response to determining that the DRM key of the sink has been revoked.

Advantageously, the processor is further configured to:
use the DRM key as a seed to generate the DRM-related wireless encryption keys.

### BRIEF DESCRIPTION OF THE SEVERAL VIEWS OF THE DRAWING(S)

Figure 1 is a block diagram illustrating the flow of protected content from a media source to a media sink via a wireless communications link according to various embodiments of the present disclosure;

Figure 2 is a block diagram of a wireless transceiver suitable for use in transferring protected information via a wireless link according to various embodiments of the present disclosure;

Figure 3a is a block diagram illustrating the sink-side wireless transceiver suitable for encoding and transferring protected content using modified wireless keys, according to various embodiments of the present disclosure;

Figure 3b is a block diagram illustrating a video source connected to wireless circuitry used to transfer of protected content via a wireless link, according to various embodiments of the present disclosure;

Figure 4a is a block diagram illustrating a wireless transceiver suitable for receiving protected content encoded using modified wireless keys according to various embodiments of the present disclosure;

Figure 4b is a block diagram illustrating wireless receiving circuitry connected to video circuitry according to embodiments of the present disclosure;

Figure 5 is a block diagram illustrating selectively encoded transmission of information according to embodiments of the present disclosure;

Figure 6 is a block diagram illustrating transfer of an encoded video stream from a wireless access device to a mobile video device, according to various embodiments of the present disclosure;

Figure 7 is a flowchart illustrating a method of transmitting protected content according to various embodiments of the present disclosure;

Figure 8 is a flowchart illustrating a method performed by a device receiving encrypted content according to various embodiments of the present disclosure;

Figure 9 is a block diagram illustrating the general functionality of a wireless transceiver according to embodiments of the present disclosure.

### DETAILED DESCRIPTION OF THE INVENTION

In various embodiments described herein, protected content to be delivered under a digital rights management (DRM) scheme is received at a wireless communication device. The wireless communication device receives information allowing a DRM key associated with the media sink to be determined. The DRM key can then be used to generate DRM modified wireless encryption keys, which in turn can be used to encode the protected content for transmission over a wireless link. The DRM modified keys can be used, for example to seed a Wi-Fi Protected Access (WPA) encryption engine in place of other keys normally used in the wireless transmission process.

As used herein, the term "digital rights management" (DRM) is intended to be interpreted to encompass various content protection schemes, standards, protocols, and processes by which various types of data are protected from unauthorized copying and access. Among the content protection schemes encompassed by the term DRM, are the High-bandwidth Digital Content Protection (HDCP) standard, and other similar standards that employ key-exchange or similar procedures to protect sensitive data, even though such standards may not be part of a DRM standard in the strictest sense.

The terms "source," "media source," "content source," and similar derivative terms are intended to refer to a device that reads or retrieves protected content from a storage medium and makes it available in a computer-readable format, unless otherwise specified. Thus, a media source can refer to a digital video disk (DVD) player, a server that obtains protected content and distributes the content for consumption, a node in a network that receives protected content via a network connection and retransmits the content to other network nodes with or without further processing of the underlying data. The terms "sink," "media sink," "content sink," and similar derivative terms are intended to refer to a device used to consume, process and make available protected content received from a source. Thus, a television, tablet computer, mobile phone, or other device capable of rendering, reproducing, and otherwise making protected content perceivable to an end user are examples of media sinks. Note that although media content, such as audio and video content is used in many of the examples, protected content is not necessarily limited to audio and video content.

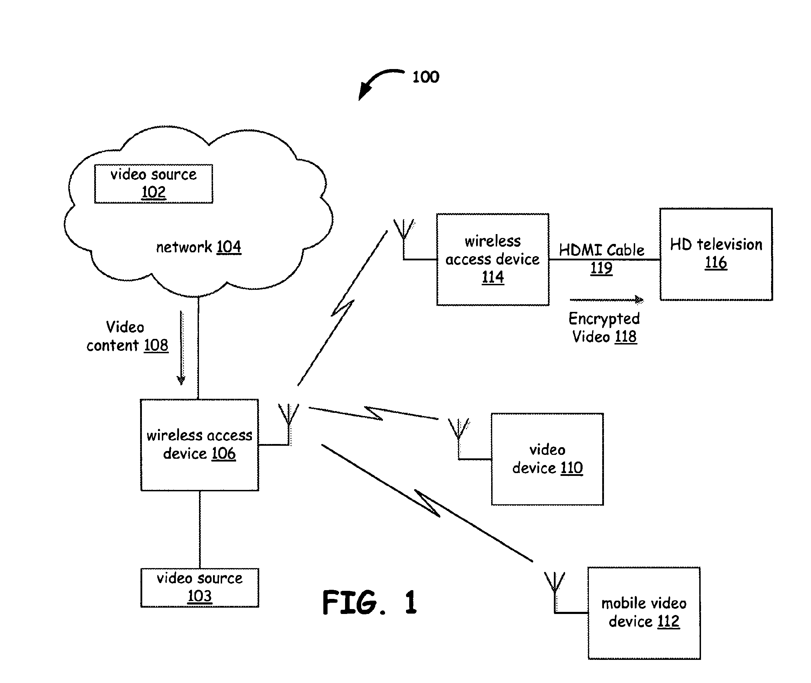

Referring first to Figure 1, a block diagram representation of a video network 100 is shown in accordance with various embodiments of the present invention. The network 104 distributes protected content, such as video content 108, from video sources 102 and 103 to a wireless access device 106 for encrypted wireless transmission to other wireless devices, such as video device 110, mobile video device 112, and wireless access device 114 over one or more wireless channels. Video content 108 can include movies, television shows, commercials or other advertisements, educational content, video gaming content, infomercials, or other program content and optionally additional data associated with such program content including, but not limited to, digital rights management data, control data, programming information, additional graphics data and other data that can be transferred in association with program content. Video content 108 can include video with or without associated audio content, and can be sent as broadcast video, streaming video, video on demand and near video on demand programming and/or other formats.

The network 104 can be a dedicated video distribution network such as a direct broadcast satellite network or cable television network that distributes video content 108 from a plurality of video sources, including video source 102, to a plurality of wireless access devices and, optionally, wired devices over a wide geographic area. In some embodiments, network 104 can be a heterogeneous network that includes one or more segments of a general purpose network such as the Internet, a metropolitan area network, wide area network, local area network or other network and optionally other networks such as an Internet protocol (IP) television network. Over various portions of a given network, the video content 108 can be carried as analog and/or digital signals according to various recognized protocols.

Wireless access device 106 can include a base station or access point that provides video content 108 to a plurality of video subscribers over a wireless local area network (WLAN) such as an 802.11a,b,g,n, WIMAX or other WLAN network, or a cellular network such as a UMTS, EDGE, 3G, 4G or other cellular data network. In addition, the wireless access device 106 can comprise a home gateway, video distribution point in a dedicated video distribution network or other wireless gateway for wirelessly transmitting video content 108, either alone or in association with other data, signals or services, to video device 110 and/or mobile video device 112.

Mobile video device 112 can include, or be communicatively coupled to, a video enabled wireless smartphone or other handheld communication device that is capable of displaying video content. Video device 110 includes other video display devices that may or may not be mobile including a television coupled to a wireless receiver, a computer with wireless connectivity via a wireless data card, wireless tuner, WLAN modem or other wireless link or device that alone or in combination with other devices is capable of receiving video content 108 from wireless access device 106 and displaying and/or storing the video content 108 for a user.

Wireless access device 114 can be coupled to any of various display devices, such as a high definition (HD) television 116 via a high-definition multimedia interface (HDMI) cable or other suitable connection, over which encrypted video 118 is delivered. In some embodiments, wireless communications encrypted using wireless transmission keys modified by HDCP key information can be transferred directly to HD television 116 over HDMI cable 119, without first being decrypted by wireless access device 114. In some such embodiments, for example, encrypting content for wireless transmission using advanced encryption standard (AES) encryption modified to use HDCP keys serves the dual purpose of encrypting for wireless communication and encrypting for protection according to a DRM scheme.

The network 104, wireless access device 106, video device 110 and/or mobile video device 112 include one or more features of the present invention that will be described in greater detail below.

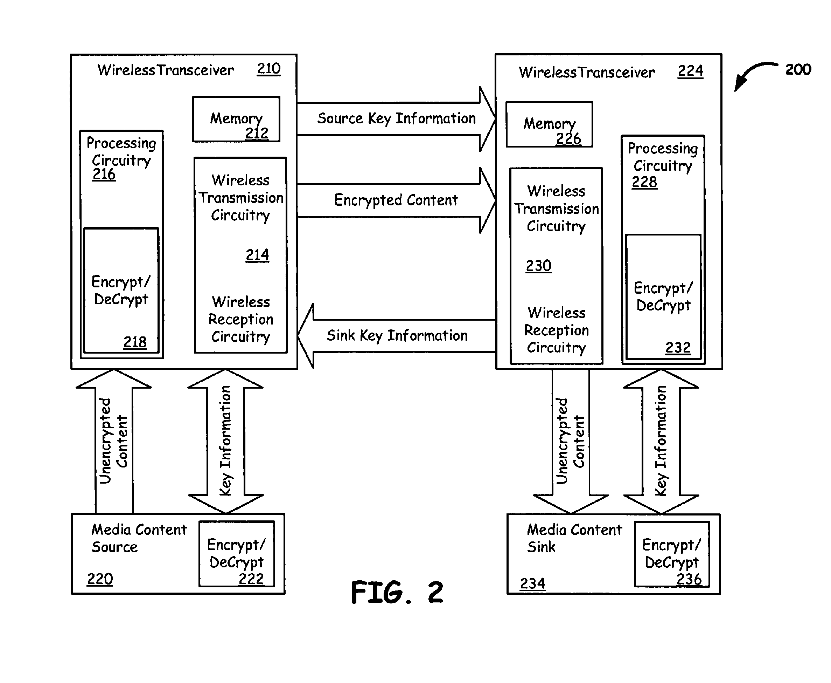

Figure 2 illustrates a system 200 for transmitting protected content, for example video content, over a wireless link according to various embodiments of the present disclosure. System 200 includes wireless transceivers 210 and 224, media content source 220 connected to wireless transceiver 210, and media content sink 234 connected the wireless transceiver 224. Media content source 220 can provide unencrypted content to wireless transceiver 210, which encrypts the content and transmits it wirelessly to wireless transceiver 224. Wireless transceiver 224 receives and decrypts the encrypted content, and delivers unencrypted content to media content sink 234.

Wireless transceiver 210 includes memory 212, wireless transmission and reception circuitry 214, and processing circuitry 216, which includes encryption/decryption circuitry 218. Wireless transceiver 224 likewise includes memory 226, wireless transmission and reception circuitry 230, and processing circuitry 228, which includes encryption and decryption circuitry 232. Encryption/decryption circuitry 218 and 232 can be implemented as software modules running on processing circuitry 228, as a combination of hardware and software, or in hardware only. Processing circuitry 228 can be implemented using a general purpose processor, a special-purpose processor, discrete components, or a combination thereof.

Communications between wireless transceiver 210 and wireless transceiver 224 are known to be encrypted using various encryption techniques, such as Wi-Fi Protected Access (WPA), Wired Equivalency Privacy (WEP), which can use pre-shared keys (PSK), Temporal Key Integrity Protocol (TKIP), or other protocols using encryption keys to encode and encrypt wireless communications. Many encryption techniques, if properly applied, can provide strong protection against undesired interception of information being transmitted between wireless transceiver 210 wireless transceiver 224.

Wireless transceiver 210 and wireless transceiver 224 can exchange information related to DRM keys associated with media source 220 and media sink 234. For example, HDCP keys normally used to encrypt the content between the media content source 220 media content sink 234 can be used to seed wireless transceivers 210 wireless transceiver 224 to generate sets of encryption keys in which the wireless transceivers apply encryption algorithms, such as AES or other algorithms normally used during wireless transmission of information.

The information related to the DRM keys can be the actual keys themselves, which may be stored in media content sink 234 or media content source 120. In other embodiments the information related to the DRM keys exchanged between wireless transceiver 210 and wireless transceiver 224 can be information used to derive the DRM keys, rather than the keys themselves. The information exchanged may include device serial numbers, or other hardware identification information. The information may also include key sequence identifiers, partial keys, limited use keys, DRM protocol identifiers or other information useful in determining the DRM keys associated with media content sink 234 or media content source 120. Furthermore, in embodiments in which media content source 220 and media content sink 234 are included in wireless transceivers 210 and 224, respectively, the information related to the DRM keys may be specific to the hardware associated with the wireless transceivers 210 and 224.

Keys and key information can be exchanged using various protocols and procedures, including those used in conjunction with the Diffie Hellman public-private key exchanges. In at least some embodiments the actual keys are not transferred, but information that can be used in conjunction with known algorithms is transmitted, allowing both the media content sink 234 to derive the key of media content source 220 and allowing media content source 222 to derive keys associated with media content sink 234.

Note that in various embodiments, the key or keys used to encode the wireless transmissions can be changed with each packet. Changing the key used to encode each packet transmitted, or periodically changing encryption keys at an interval of less than 128 packets, can provide increased security over conventional HDCP techniques. Furthermore, because wireless transceivers 210 wireless transceiver 224 already encrypt information using various protocols in the course of transmitting information over a wireless link, little if any additional processing is needed to encrypt the protected content as it is transferred between wireless transceiver 210 wireless transceiver 224. Furthermore, because the encryption is performed using standard algorithms and techniques, but based on key information associated with a DRM content protection standard or scheme, the security of the information transmitted between the wirelessly between transceivers 210 and 224 is increased in comparison to using conventional DRM content protection alone. Additionally, by using the keys associated with the content protection scheme to generate the wireless transmission keys, the need for separate encryption by the media source prior to transmitting information to the media sink 234 may not be required.

In some embodiments, wireless transceiver 210 is itself an HDCP qualified device, and can be authenticated to media content source 220 using conventional HDCP techniques, thereby allowing legacy systems to provide standard HDCP encrypted content to wireless transceiver 210. In various embodiments, wireless transceiver is configured to receive from media content source 220 either HDCP encrypted content encoded using encrypt/decrypt module 222, unencrypted plaintext content, or both. Additionally, wireless transceiver 210 can receive unencrypted content from media content source 220, and plaintext content from another source (not illustrated). In at least one aspect, media content source 220 sends unencrypted content to wireless transceiver 210 to pass some of the processing load from media source 220 to wireless transceiver 210. And because wireless transceiver 210 performs encryption as a matter of course during transmission of information via a wireless link, some such embodiments can reduce the combined processing load of media content source 220 and wireless transceiver 210.

Media content source 220 may be connected to wireless transceiver 210 through an external communication link, such as an HDMI connection, a USB connection, or some other suitable connection. In various embodiments, when wireless transceiver 210 and media content source 220 are connected via an inaccessible, or protected, trace, e.g. a buried trace or other suitable connection, content can be sent from media content source 222 wireless transceiver 210 in unencrypted format. In other embodiments, where encrypted content is sent from media content source 222 to wireless transceiver 210 Receiving the unencrypted content from media source 220 to wireless transceiver 210 encrypts the content for transmission at encryption/decryption circuitry 218.

Consider the following example of system 200 in operation. Media content source 220, which may be a DVD player a blue ray player and audio player or some other source of media content, can authenticate wireless transceiver 210 by exchanging key information to verify the wireless transceiver 210 is allowed to receive unencrypted, or plaintext, content from media content source 220. Media content source 220 sends the unencrypted content to wireless transceiver 210, which encrypts the content using encryption/decryption circuitry 218. The encryption/decryption is done using a key associated with media content sink 234, such as a DRM key. In some embodiments, where wireless transceiver 224 qualifies as a sink under a content protection scheme, the keys used to encrypt the content between wireless transceiver 210 and wireless transceiver 224 can be a content protection key associated with wireless transceiver 224 rather than media content sink 224. In the present example, keys used to encrypt and decrypt unencrypted content for wireless transmission between wireless transceiver 210 and wireless transceiver 224 are associated with media content sink 234.

After the protected content is encrypted, wireless transmission circuitry 214 transmits the wirelessly encrypted content, or the content encrypted using wireless keys based on media content sink 234, to wireless transceiver 224. Wireless reception circuitry 230 receives the encrypted content and passes the encrypted content to encryption/decryption circuitry 232. Any unencrypted content is then passed to media content sink 234 for display or presentation to a user, or for further processing, using encryption/decryption module 236.

Prior to wireless transceiver 224 sending unencrypted content to media content sink 234, wireless transceiver 224 can exchange key information with media content sink 234 to determine that media content sink 234 is authorized to receive unencrypted protected content. The keys exchanged with media content sink 234 can be associated with wireless transceiver 224, with media content source 220, or in some cases with wireless transceiver 210, depending upon which unit is acting as the source for the information. If media content sink 234 is authenticated as being permitted to receive unencrypted content, wireless transceiver 224 can provide the unencrypted content to media content sink 234 in the clear, e.g. plaintext, thereby relieving media content sink 234 of the need to decrypt the content using encrypt/decrypt module 236. In some embodiments, where media content sink 234 is not authorized to receive unencrypted content, the information can be sent in encrypted format, and media content sink 234 can encrypt or decrypt the information itself, according to the content protection scheme being implemented.

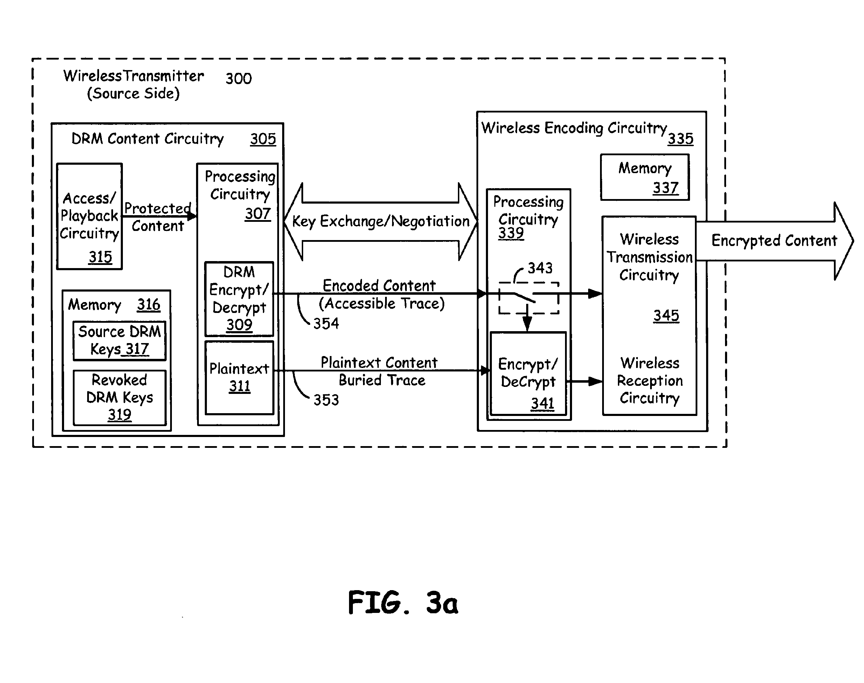

Referring next to Figure 3a, a source-side wireless transceiver 300 will be discussed according to various embodiments of the present disclosure. Source-side wireless transceiver 300 includes DRM content circuitry 305 and wireless encoding circuitry 335. DRM content circuitry 305 includes access playback circuitry 315, memory 316, and processing circuitry 307. Memory 316 can be used to store source DRM keys 317 and a list of revoked DRM keys 319; processing circuitry 307 includes DRM encryption/decryption circuitry 309, and plaintext transmission circuitry 311. DRM content circuitry 305 can be coupled to wireless encoding circuitry 335 via a protected connection such as buried trace 353, or it accessible trace 354. Buried trace 353 can be used to transmit plaintext content to wireless encoding circuitry 335, and accessible trace 354 can be used to transmit encoded content from the DRM content circuitry 305 to wireless encoding circuitry 335. By providing both accessible trace 354 and buried trace 353 between DRM content circuitry 305 and wireless encoding circuitry to 35, wireless transceiver 300 has the ability to support legacy DRM protection schemes in which only the DRM content circuitry encrypts the protected content in accordance with the content protection policies, standards or schemes.

Switch 343, included in processing circuitry 339, can be used to either pass the protected content to the wireless transmission circuitry 345, which sends the DRM encrypted content wirelessly without further encoding, or to encryption/decryption circuitry 341 which then further encrypts or decrypts the already encrypted DRM encoded content according to standard wireless transmission protocols. Switch 343 can be a logical switch or module implemented in software or hardware, a physical switch implemented in hardware, or a combination thereof, and can provide source-side wireless transceiver 300 with the ability to handle both legacy content protection schemes and content protection schemes in which wireless encoding circuitry 335 encrypts protected content for wireless transmission using modified DRM encryption keys. In some embodiments, encryption/decryption circuitry 335 may decrypt content encoded according to legacy DRM content sources, and re-encrypt the protected content using the techniques discussed herein.

Wireless encoding circuitry 335 also includes memory 337, which can be used as necessary to store various programs or software modules, to buffer or cache data, to store DRM keys (not illustrated), or to perform other storage functions known to those skilled in the art.

In some implementations, key exchange negotiation can take place between DRM content circuitry 305 and wireless encoding circuitry 335, enabling DRM content circuitry 305 to authenticate wireless encoding circuitry 335 as being allowed to receive plaintext content. If wireless encoding circuitry 335 is authorized to receive plaintext content from DRM content circuitry 305, then plaintext content can be sent over buried trace 353 and encrypted for wireless transmission using encryption/decryption circuitry 341 in conjunction with modified DRM keys. As noted earlier, the encryption performed by encryption/decryption 341 to plaintext content received over buried trace 353 can be performed using keys associated with a sink, or intended recipient device of the protected content. Keys associated with the device receiving the protected content can be used to encode and decode the information transmitted by wireless transmission circuitry 345.

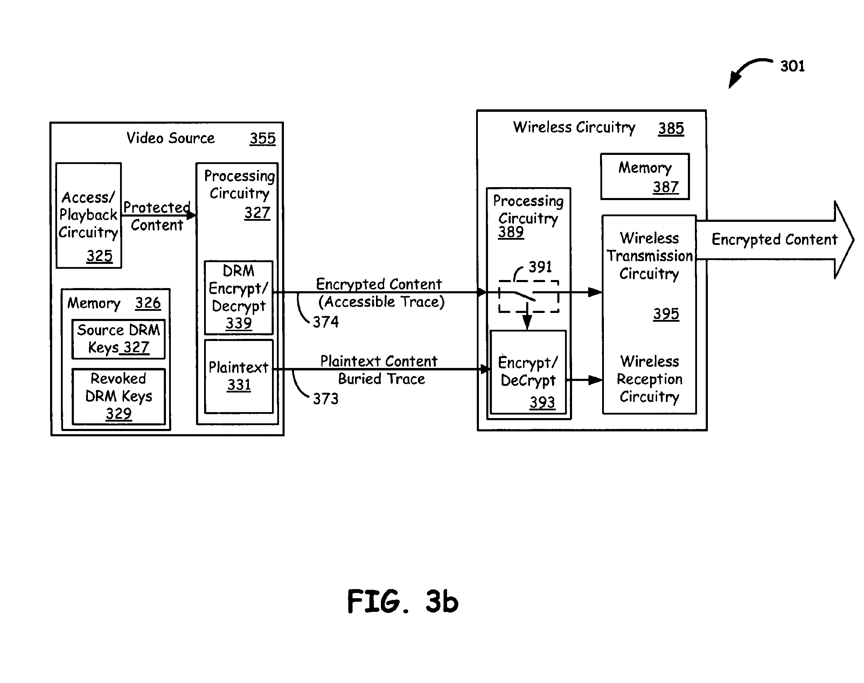

Referring next to Figure 3b, a system 301 will be discussed according to various embodiments of the present disclosure. System 301 includes Video Source 355 and wireless circuitry 385. Video Source 355 includes access playback circuitry 325, memory 326, and processing circuitry 327. Memory 326 can be used to store source DRM keys 327 assigned to video source 355, and a list of revoked DRM keys 329. Processing circuitry 327 includes DRM encryption/decryption circuitry 309, which can include circuitry used to perform encryption using the HDCP standard or another content protection scheme, and plaintext transmission circuitry 311. Video Source 355 can be coupled to wireless circuitry 385 via a protected connection such as buried trace 373, or via an unprotected connection such as accessible trace 374, an HDMI cable, or the like.

Buried trace 373 can be used to transmit plaintext content from video source 355 to wireless circuitry 385, while accessible trace 354 transmits encoded content to wireless circuitry 385. By providing both accessible trace 374 and buried trace 373, various embodiments have the ability to support legacy DRM protection schemes in which DRM encryption is performed exclusively by processing circuitry 327 included in video source 355.

Wireless circuitry 385 can be part of a packet-switched network node, for example a wireless access point in a local area network, or can be part of a wireless enabled video player, television, smart phone, or the like. Wireless circuitry 385 included a memory 387, wireless transmission and reception circuitry 395, and processing circuitry 389. Content to be transmitted wirelessly to a video sink can be received from video source 355 in plaintext format via buried trace 373, or in an encrypted format via accessible trace 374.

In cases where encrypted content is received from video source 355, switch 391, which can be a physical switch or a logical switch implemented in software, firmware or hardware, can pass the encrypted content to wireless transmission and reception circuitry 395, which further encodes the encrypted content from video source 355 into packetized payloads for wireless transmission. In those cases, the wireless transmission received at a destination wireless device would be decoded using standard wireless techniques to recover the encrypted payload, which would require further decryption.

In cases where plaintext content is received from video source 355, the plaintext content can be encrypted according to a DRM scheme at encryption/decryption circuitry 393. For example, the plaintext content can be encrypted according to an HDCP standard, and routed to wireless transmission and reception circuitry in a manner similar to the encrypted content received via accessible trace 374.

In other instances, however, the plaintext content can be passed through encryption/decryption circuitry 393 without being encrypted, so that the plaintext content is received at wireless transmission and reception circuitry 395, which uses DRM keys, for example HDCP keys, or other content protection information to encrypt the plaintext content using wireless encryption techniques. When plaintext content is encoded in this way by wireless transmission and reception circuitry 395, the transmission need only be decrypted one time at the receiving end. So for example, when the receiving wireless device decrypts the wireless transmission using wireless techniques to recover the payload, a plaintext payload is recovered rather than an encrypted payload. In this way, the content transmitted wirelessly is protected for both purposes of wireless transmission and DRM content protection using a single level of encryption.

Note that in some embodiments, encrypted content received from video source 355 can first be decrypted ad encryption/decryption circuitry 393 to recover the plaintext content, and the plaintext content is then delivered to wireless transmission and reception circuitry 395 for encoding/encryption as described above.

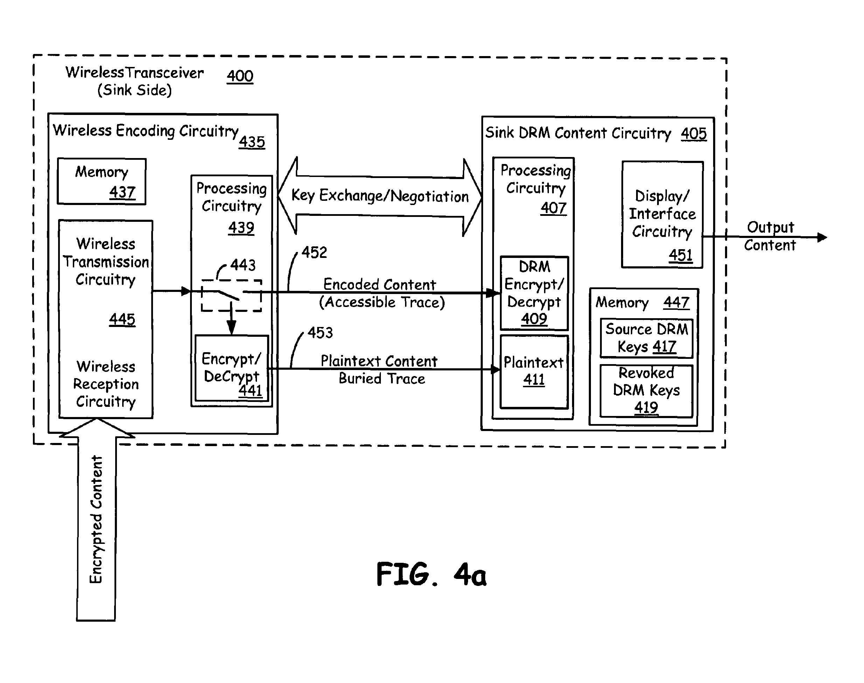

Referring next to Figure 4a, sink-side wireless transceiver 400 is illustrated and discussed according to various embodiments. Sink-side wireless transceiver 400 includes wireless encoding circuitry 435 and sink DRM content circuitry 405. Wireless and coding circuitry 435 includes memory 437, wireless transmission and reception circuitry 445, and processing circuitry 439, which includes switching module 443 and encryption/decryption circuitry 441. Sink DRM content circuitry 405 includes a display or display interface circuitry 451 to provide content output for display to a user, memory 447 which can be used to store source DRM keys 417 and revoked DRM keys 419, and processing circuitry 407 which can include DRM encryption and decryption circuitry 409 and plaintext processing circuitry 411. Wireless encoding circuitry 435 and sink DRM content circuitry 405 can be connected via both accessible trace 452 and a protected connection, such as buried trace 453.

In the illustrated embodiment, sink DRM content circuitry 405 can be included in wireless transceiver 400 so that wireless transceiver 400 includes the display device used as the source sink. Examples of wireless transceiver 400 include mobile phones, wireless access points, portable video and audio displays, laptops, palmtops, or the like. In some embodiments, however, wireless transceiver 400 can, additionally or in place of including a built-in display, use display/interface circuitry 451 to send content to a connected content sink. The sink-side wireless transceiver 400 receives encrypted content via the wireless reception circuitry 445, and can delivers the content in a DRM encoded form to sink DRM content circuitry 405, or decrypt the content using encryption/decryption circuitry 441 before delivering the content in a plaintext form via buried trace 453 to plaintext circuitry 411. Switch 443 in processing circuitry 439 can be used to make the decision about whether or not the protected content is to be delivered to the sink DRM content circuitry 405 in encrypted or plaintext form. The decision can be made based on whether or not sink DRM content circuitry 405 is authorized to receive plaintext content. The decision to provide sink DRM content circuitry 405 content encoded according to the DRM scheme can also depend on whether or not the system is operating in a legacy mode, in which the DRM source encodes and the DRM sink decodes, the protected content. However, in certain embodiments that employ wireless encoding based on keys associated with source and sink DRM keys, wireless encoding circuitry 435 can use the DRM keys, or modified wireless keys based on the DRM keys, to decrypt the wireless transmission so that no further decryption is required at sink DRM content circuitry 405. In some such embodiments, the wireless encoding circuitry 435, which performs wireless encoding and decoding as a matter of course in its normal operation, can be used to offload some of the processing tasks that would otherwise be performed by DRM encryption/decryption engine 409 in sink DRM content circuitry 405.

In at least some embodiments, prior to exchanging either encoded content via accessible trace 452, or plaintext content via buried trace 453, wireless encoding circuitry 435 performs a key exchange and negotiation, or otherwise transfers key information, between sink DRM content circuitry 405 and wireless encoding circuitry 435. The keys exchanged, or the information associated with the keys, can also be used by wireless encoding circuitry 435 to decide whether or not protected content can be provided to sink DRM content circuitry 405. In some implementations, sink DRM content circuitry 405 can serve as a sink, and output protected content using display/interface circuitry 451. Source DRM keys 417 and revoked DRM keys 419, which are stored in memory 447 can be used to verify the authenticity of a connected display device.

Wireless encoding circuitry 435 can decode encrypted content received at wireless reception circuitry 445, and deliver plaintext content to sink DRM content circuitry 445, which in turn can deliver either plaintext or DRM encoded content via display/interface circuitry 451. Where encrypted content is delivered to an external sink (not illustrated) via display interface circuitry 451, the encrypted content can be encrypted content encoded by the original source using conventional DRM encoding techniques, or content that has been wirelessly transmitted using modified DRM keys, decoded by encrypt/decrypt module 441, delivered to sink DRM content circuitry 405 in plaintext, and re-encoded based on the requirements of the display interface circuitry 451.

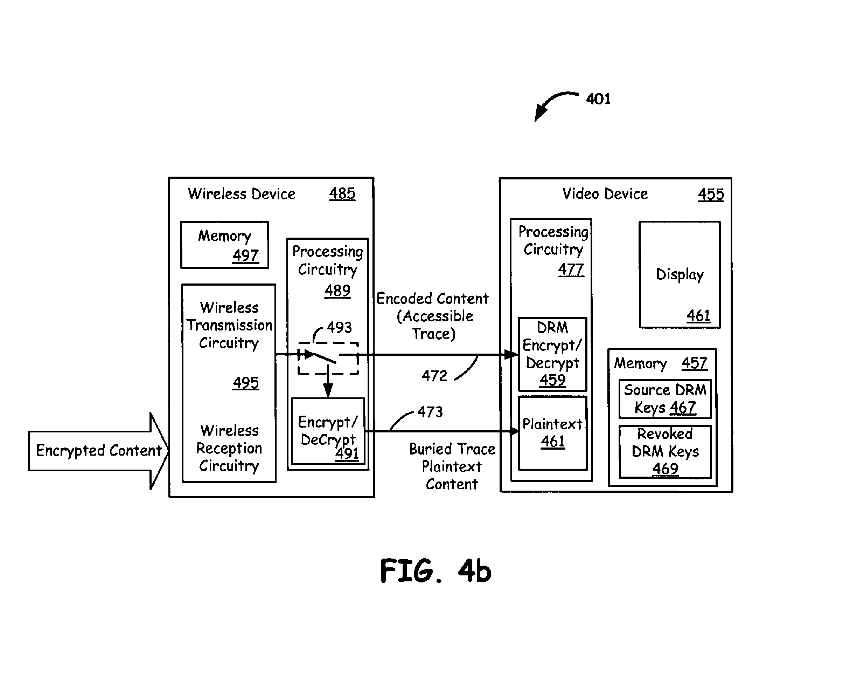

Referring next Figure 4b, a system 401 is illustrated and discussed according to various embodiments. System 401 includes wireless device 485 and video device 455. Wireless device 485 includes memory 497, and wireless transmission and reception circuitry 495. Wireless device 485 also includes processing circuitry 489, which in turn includes switching module 493 and encryption/decryption circuitry 491. Video device 455 includes a display 461 to display content to a user, memory 457 which can be used to store source DRM keys 467 and revoked DRM keys 469, and processing circuitry 477 which includes DRM encryption and decryption circuitry 459 and plaintext processing circuitry 461. Wireless device 485 and video device 455 can be connected via both an accessible trace 472, such as an HDMI cable or the like, and/or a protected connection, such as buried trace 473.

Wireless device 485 receives encrypted content via wireless transmission and reception circuitry 495, and can deliver the content in a DRM encoded form to video device 455, or decrypt the content using encryption/decryption circuitry 491 before delivering the content to plaintext circuitry 461 in a plaintext form via buried trace 473. Switching module 493 can be used to make the decision about whether or not the protected content is to be delivered to video device 455 in encrypted or plaintext form. The decision can be made based on whether or not video device 455 is authorized to receive plaintext content, and whether video device 455 or wireless device 485 is operating in a legacy mode. Thus, a wireless transmission encrypted using modified DRM keys or other techniques described herein, can either be decrypted by wireless device 485, or delivered directly to video device 455 for decryption.

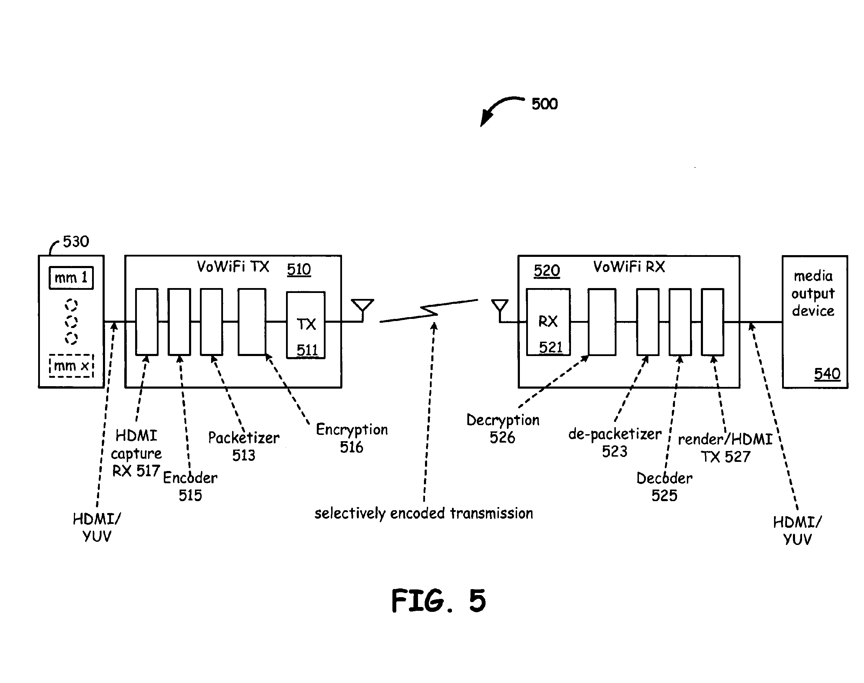

Referring next to Figure 5, a diagram illustrating a wireless communication system employing selectively encoded transmissions is illustrated and discussed according to various embodiments. The wireless communication system of this diagram illustrates how different respective media elements may be provided from one or more media element sources (e.g., examples of such media element sources include STBs, Blu-Ray players, PCs, etc.). A video over wireless local area network/Wi-Fi transmitter (VoWiFi TX) 510 is operative to receive one or more media elements from one or more media element sources. These one or more media elements may be provided in accordance with any of a variety of communication standards, protocols, and/or recommended practices. In one embodiment, one or more media elements mm 1-mm x are provided in accordance with High Definition Multi-media Interface TM (HDMI) and/or YUV (such as HDMI/YUV). As the reader will understand, the YUV model defines a color space in terms of one luma (Y) [e.g., brightness] and two chrominance (UV) [e.g., color] components.

The VoWiFi TX 510 includes respective circuitries and/or functional blocks therein. For example, an HDMI capture receiver 517 initially receives the one or more media elements 530 and performs appropriate receive processing thereof. An encoder 515 then is operative selectively to encode different respective media elements using various different protocols. For example, media content can be encoded and compressed according to various standards, such as H.264 or MPEG-4, or other suitable media encoding standards. A packetizer 513 is implemented to packetize the respective encoded/transcoded media elements, and encryption module 516 encrypts wireless transmissions using a modified DRM key or keys, and encrypting others using standard wireless transmission keys, for subsequent transmission to one or more recipient devices using the transmitter (TX) 51 within the VoWiFi TX 510.

Independent and unbundled encoded/transcoded media elements may be transmitted to one or more recipient devices via one or more wireless communication channels. Within this diagram, one such recipient device is depicted therein, namely, a video over wireless local area network/Wi-Fi receiver (VoWiFi RX) 520. Generally speaking, the VoWiFi RX 520 is operative to perform the complementary processing that has been performed within the VoWiFi TX 510. That is to say, the VoWiFi RX 520 includes respective circuitries and/or functional blocks that are complementary to the respective circuitries and/or functional blocks within the VoWiFi TX 510. For example, a receiver (RX) 521 therein is operative to perform appropriate receive processing of one or more media elements received thereby. Decryption module 526 decrypts some transmissions from RX 521 using a modified DRM key or keys as appropriate, and decrypts other transmissions using standard wireless transmission keys. A de-packetizer 523 is operative to construct a signal sequence from a number of packets. Thereafter, a decoder 525 is operative to perform the complementary processing to that which was performed by the encoder within the VoWiFi TX 510. The output from the decoder 525 is provided to a render/HDMI transmitter (TX) 527 to generate at least one encoded/transcoded media element that may be output via one or more devices 540 for consumption by one or more users.

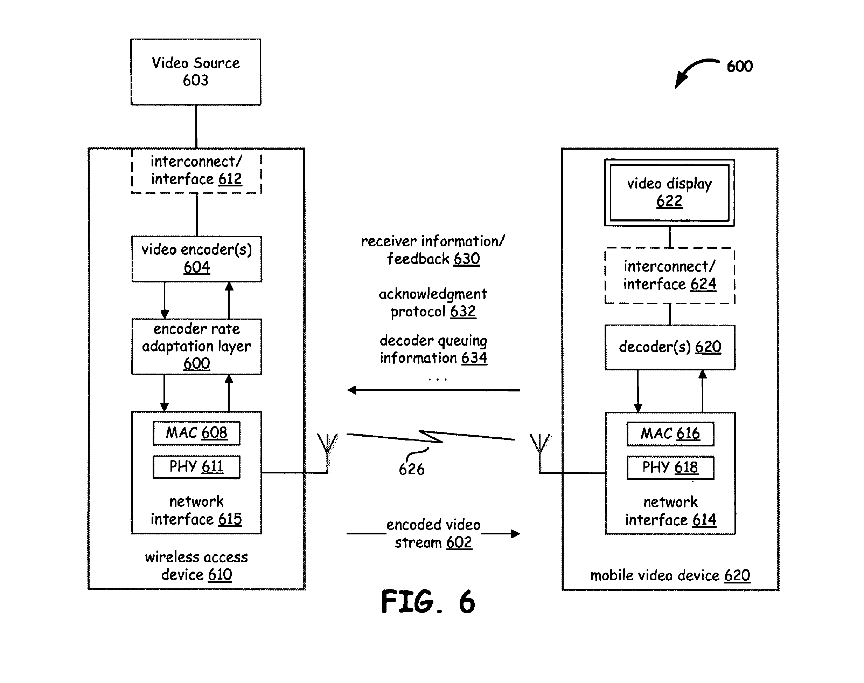

Referring next to Figure 6 a functional block diagram illustrating encoding and communication of a video stream by a wireless access device will be discussed in accordance with embodiments of the present invention. An encoder rate adaptation layer 600 is shown that can be used in combination with wireless access device 610 to provide an encoded video stream 602 to a mobile video device 620 over a wireless channel 626. Generally speaking, when considering a communication system in which video data is communicated wirelessly from one location, or subsystem, to another, video data encoding may generally be viewed as being performed at a transmitting side of the wireless channel 626, and video data decoding may generally be viewed as being performed at a receiving side of the wireless channel 626.

In the illustrated embodiment, video content is provided by a video source 603 to the wireless access device 610 for encoding and transmission. The video content may be communicated to the wireless access device 610 by various means such as those described above. In one embodiment, the video source 603 comprises a cable or satellite set top box, gaming console or the like that is coupled to the wireless access device 610 by a standardized interconnect/interface 612. The standardized interconnect/interface 612 may comprise, for example, an audio/video cable such as an HDMI cable (in which case the wireless access device 610 may take the form of a wireless dongle), a high bandwidth wireless link (e.g., a WiGig or WirelessHD compliant link) capable of transmitting uncompressed, standard or high definition video content, or various combinations of such technologies.

Wireless access device 610 includes a video encoder(s) 604 that receives and encodes video content for transmission (in the form of encoded video stream 602) by network interface 615 over wireless channel 626. An encoder rate adaptation layer 600 communicates with the video encoder(s) 604, including signals for adaptively altering the encoding bit rate and/or other operative parameters of the video encoder(s) 604. The encoder rate adaptation layer 600 is also capable of receiving information from the network interface 615. Such information can be used by the encoder rate adaptation layer 600 to generate estimates of the throughput of the wireless channel 626 under varying conditions in accordance with present invention.

Encoded video content from the encoder 604 is provided to network interface 615 for transmission to mobile video device 620. In the disclosed embodiment, the network interface 615 includes medium access control (MAC) 608 and physical layer (PHY) 61 circuitry. A main purpose of the MAC 608 is to allocate the bandwidth of the wireless channel 626 and coordinate access when multiple video devices are sharing the channel. While such allocation is generally easier in centrally-coordinated systems such as a cellular network than in distributed networks such as an IEEE 802.11 compliant network, the MAC 608 and PHY 611 may operate in accordance with a wide variety of packet based communication protocols. Among other functions, the PHY 611 establishes and terminates connections to the wireless channel 626. In the disclosed embodiment, PHY 610 generates and transmits modulated RF signals containing the encoded video stream 602 over the wireless channel 626.

In the illustrated mobile video device 620, a network interface 614 receives RF signals (over the wireless channel 626) containing the encoded video stream 602. The PHY 618, in cooperation with the MAC 616, then demodulates and down converts these RF signals to extract the encoded video stream 602. In turn, the decoder 620 operates on video data from the extracted video stream 602 to generate a decoded video stream for display on a video display 622.

An optional interconnect/interface 624 (including, for example, the various embodiments disclosed above in conjunction with interconnect/interface 612) may be utilized to provide decoded video content to, for example, a high definition television or projection system. In such embodiments, as well as other embodiments, the video display 622 may be part of or a separate component from the mobile video device 620.

The network interface 614 of the disclosed embodiment also provides various transmissions to the wireless access device 610 including, for example, signaling in accordance with an acknowledgement (ACK/NACK) protocol 632 and decoder queuing information 634. Such receiver information/feedback 630, in conjunction with transmitter side channel throughput indicia 602, may be utilized to generate estimates of current and/or expected channel throughputs under a variety of operating conditions.

Hereinafter, the terms "ACK", "acknowledgement", and "BA" are all meant to be inclusive of either ACK or BA (block acknowledgement) and equivalents. For example, even if only one or ACK or BA is specifically referenced, such embodiments may be equally adapted to any of ACK or BA and equivalents. One of the benefits of video encoding in accordance with the present invention may be a significant reduction in number of NACKs received by the wireless access device 610. It is noted, however, that ACKs may not provide an immediate indication of channel conditions when, for example, an ACK is the result of successful error correction on the receiving side of the wireless channel 626.

Video encoder 604 and encoder rate adaptation layer 600 can be implemented in hardware, software or firmware. In particular embodiments, the video encoder 604 and encoder rate adaptation layer 600 can be implemented using one or more microprocessors, microcomputers, central processing units, field programmable logic devices, state machines, logic circuits, analog circuits, digital circuits, and/or any devices that manipulate signals (analog and/or digital) based on operational instructions that are stored in a memory module. The function, steps and processes performed by video encoder 604 or encoder rate adaptation layer 600 can be split between different devices to provide greater computational speed and/or efficiency. The associated memory module may be a single memory device or a plurality of memory devices. Such a memory device may be a read-only memory, random access memory, volatile memory, non-volatile memory, static random access memory (SRAM), dynamic random access memory (DRAM), flash memory, cache memory, and/or any device that stores digital information. Note that when the video encoder 604 and/or encoder rate adaptation layer 600 implement one or more of its functions via a state machine, analog circuitry, digital circuitry, and/or logic circuitry, the memory module storing the corresponding operational instructions may be embedded within, or external to, the circuitry comprising the state machine, analog circuitry, digital circuitry, and/or logic circuitry.

Further, within each of the wireless access device 610 and mobile video device 620, any desired integration or combination may be implemented for the various components, blocks, functional blocks, circuitries, etc. therein, and other boundaries and groupings may alternatively be performed without departing from the scope and spirit of the invention. For example, all components within the network interface 615 may be included within a first processing module or integrated circuit, and all components within the network interface 614 may be included within a second processing module or integrated circuit. Likewise, while shown as separate from video source 603, encoder(s) 604 and encoder rate adaptation layer 600 can be incorporated into video source 603 or other network element.

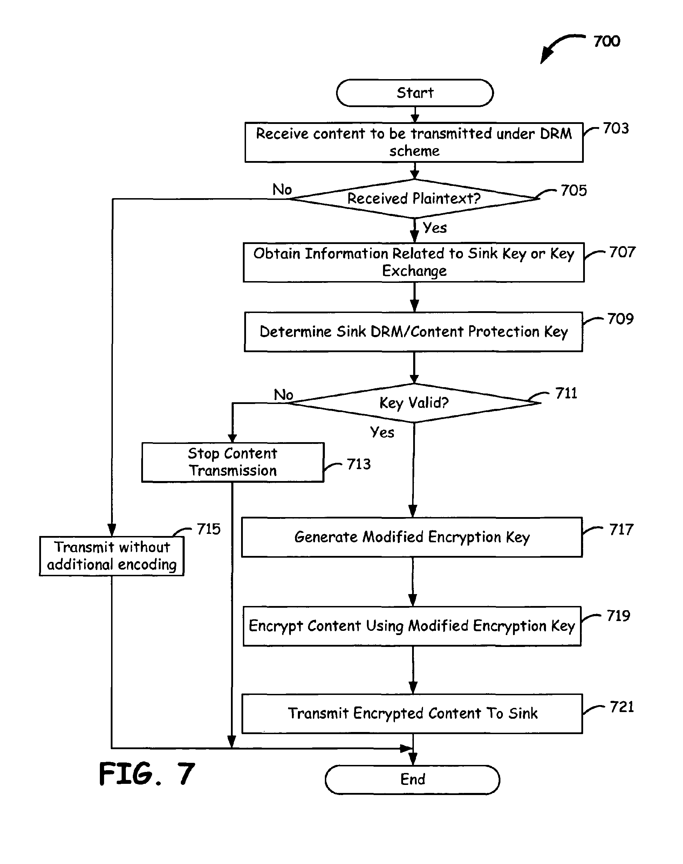

Referring next to Figure 7, a method 700 according to various embodiments of the present disclosure will be discussed. Method 700 begins at block 703, where content to be transmitted under a digital rights management (DRM) scheme is received at a wireless transceiver. At block 705, a check is made to determine whether or not the content to be transmitted was received in plaintext format, or was encoded. If the protected content has already been encrypted in a DRM format, block 715 illustrates that the encrypted content can be transmitted wirelessly without additional encryption.

In the event that the content is received at the wireless transmission device in plaintext format, the method proceeds to block 707, which illustrates that information related to the sink key is obtained. The information related to the sink he may be the sink key itself, or information usable by the wireless transceiver to generate or reproduce the sink key. In some embodiments, in addition to obtaining information related to the sink key, a key exchange may take place, in which one or both of a wireless transmitting device connected to a source and a wireless receiving device connected to a sink exchange keys or information allowing the other unit to determine one or more DRM keys of the other unit.

As illustrated by block 709, once information related to the sink key, or the key exchange has taken place, a sink DRM key/content protection key can be determined. Once the sink DRM key is determined, a check is made at block 711 to determine whether the key is valid. If the sink DRM key is determined not to be valid, the wireless transceiver will stop content transmission at block 713. If, however, the sink key is determined to be valid, wireless transceiver generates a modified encryption key at block 717. The modified encryption key can be used to encrypt content at block 719, using any of various known cryptographic algorithms typically used in wireless communications. For example, the modified encryption key can be used in a WPA, WEP or other encryption scheme to generate multiple different keys, so that the key used to encode each packet for wireless transmission can be changed. Protected content is encrypted using the modified encryption key, which is generated based on the DRM key of the sink, thus, effectively combining the DRM content protection scheme with the wireless transmission scheme. Use of the modified encryption key can also alleviate the requirement for the source to encrypt protected content, and allow the wireless transceiver, which encrypts content as a matter of course anyway, to encrypt the content using the specially modified encryption key.

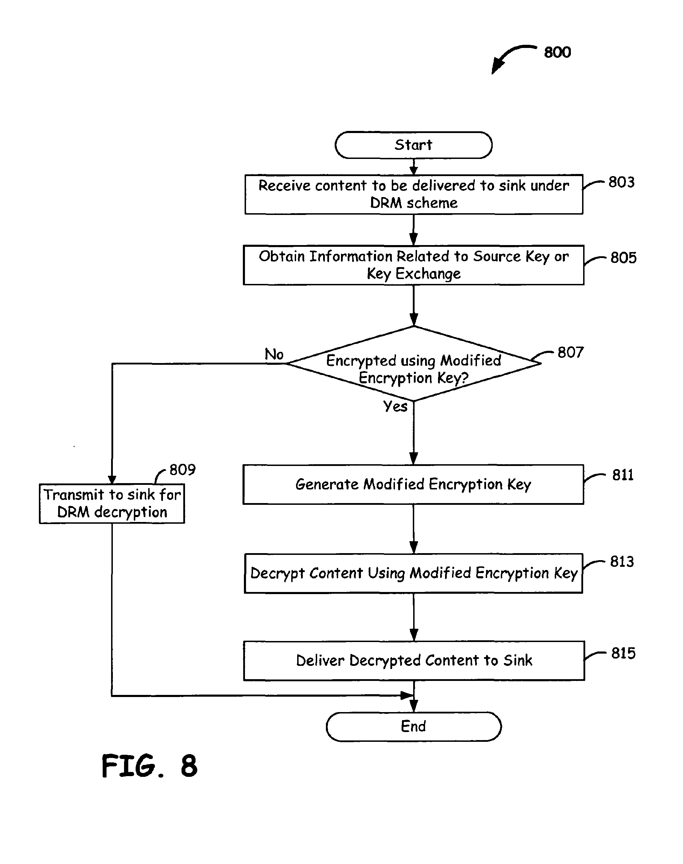

As illustrated by block 721, the encrypted content is transmitted to the sink via a wireless link. Transmitting encrypted content to the sink can include transmitting the content to a receiving wireless device which can in turn decrypt the wireless communication as described further with reference to Figure 8.

Referring next Figure 8, a method 800 according to various embodiments of the present disclosure will be discussed. At block 803 a receiving wireless device receives the content to be delivered to a content sink under a DRM scheme. Block 805 illustrates the receiver obtaining information related to the source key, or performing a key exchange with the source or a wireless transceiver connected to the source. As shown in block 807, a determination is made regarding whether the received content is encrypted using the modified encryption key or whether the content has been previously encrypted using the DRM key directly, such that the content received via the wireless communication link is actually a payload, and is not encrypted with a DRM key at the transmission level. If the information in the packet received is not encrypted using the modified encryption key, the receiving transceiver can transmit the information directly to the content sink for DRM decryption at block 809.

If, however, the wireless transmission has been encrypted using modified encryption keys, then as shown by block 811, the modified encryption key is regenerated and used to decrypt the content. As illustrated at block 813, the decrypted content can be delivered at block 815 to the content sink, thereby removing the need for the sink itself to perform the decryption.

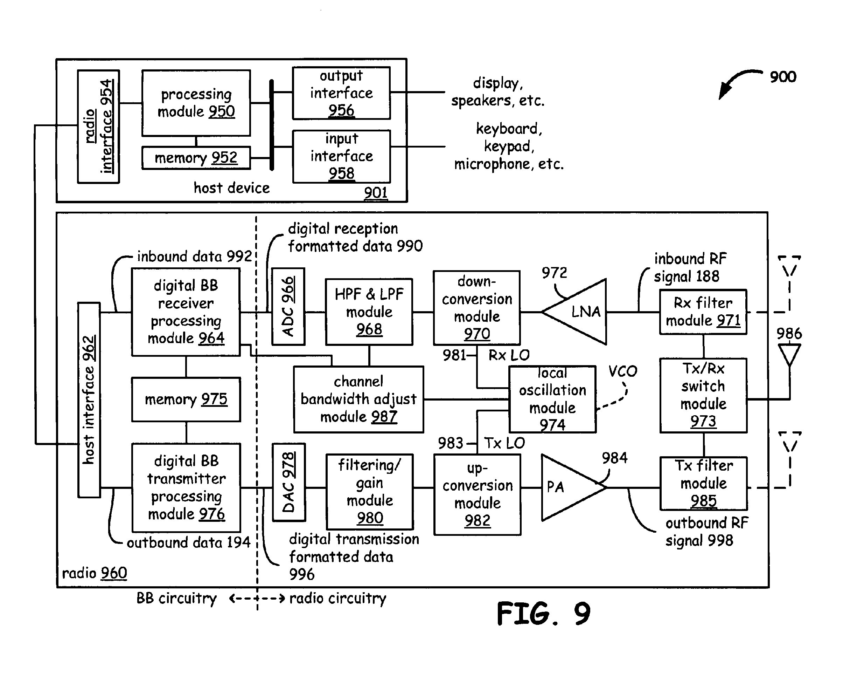

Referring next to Figure 9, a diagram illustrating an embodiment of a wireless communication device 900 that includes a host device 901 and an associated radio 960. For cellular telephone hosts, the radio 960 is a built-in component. For personal digital assistants hosts, laptop hosts, and/or personal computer hosts, the radio 960 may be built-in or an externally coupled component.

As illustrated, the host device 901 includes a processing module 950, memory 952, a radio interface 954, an input interface 958, and an output interface 956. The processing module 950 and memory 952 execute the corresponding instructions that are typically done by the host device. For example, for a cellular telephone host device, the processing module 950 performs the corresponding communication functions in accordance with a particular cellular telephone standard.

The radio interface 954 allows data to be received from and sent to the radio 960. For data received from the radio 960 (e.g., inbound data), the radio interface 954 provides the data to the processing module 950 for further processing and/or routing to the output interface 956. The output interface 956 provides connectivity to an output display device such as a display, monitor, speakers, etc., such that the received data may be displayed. The radio interface 954 also provides data from the processing module 950 to the radio 960. The processing module 950 may receive the outbound data from an input device such as a keyboard, keypad, microphone, etc., via the input interface 958 or generate the data itself. For data received via the input interface 958, the processing module 950 may perform a corresponding host function on the data and/or route it to the radio 960 via the radio interface 954.

Radio 960 includes a host interface 962, digital receiver processing module 964, an analog-to-digital converter 966, a high pass and low pass filter module 968, an IF mixing down conversion stage 970, a receiver filter 971, a low noise amplifier 972, a transmitter/receiver switch 973, a local oscillation module 974 (which may be implemented, at least in part, using a voltage controlled oscillator (VCO)), memory 975, a digital transmitter processing module 976, a digital-to-analog converter 978, a filtering/gain module 980, an IF mixing up conversion stage 982, a power amplifier 984, a transmitter filter module 985, a channel bandwidth adjust module 987, and an antenna 986. The antenna 986 may be a single antenna that is shared by the transmit and receive paths as regulated by the Tx/Rx switch 973, or may include separate antennas for the transmit path and receive path. The antenna implementation will depend on the particular standard to which the wireless communication device is compliant.

The digital receiver processing module 964 and the digital transmitter processing module 976, in combination with operational instructions stored in memory 975, execute digital receiver functions and digital transmitter functions, respectively. The digital receiver functions include, but are not limited to, digital intermediate frequency to baseband conversion, demodulation, constellation demapping, decoding, and/or descrambling. The digital transmitter functions include, but are not limited to, scrambling, encoding, constellation mapping, modulation, and/or digital baseband to IF conversion. The digital receiver and transmitter processing modules 964 and 976 may be implemented using a shared processing device, individual processing devices, or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The memory 975 may be a single memory device or a plurality of memory devices. Such a memory device may be a read-only memory, random access memory, volatile memory, non-volatile memory, static memory, dynamic memory, flash memory, and/or any device that stores digital information. Note that when the processing module 964 and/or 976 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

In operation, the radio 960 receives outbound data 994 from the host device via the host interface 962. The host interface 962 routes the outbound data 994 to the digital transmitter processing module 976, which processes the outbound data 994 in accordance with a particular wireless communication standard (e.g., IEEE 802.11, Bluetooth, ZigBee, WiMAX (Worldwide Interoperability for Microwave Access), any other type of radio frequency based network protocol and/or variations thereof etc.) to produce outbound baseband signals 996. The outbound baseband signals 996 will be digital base-band signals (e.g., have a zero IF) or digital low IF signals, where the low IF typically will be in the frequency range of one hundred kHz (kilo-Hertz) to a few MHz (MegaHertz).

The digital-to-analog converter 978 converts the outbound baseband signals 996 from the digital domain to the analog domain. The filtering/gain module 980 filters and/or adjusts the gain of the analog signals prior to providing it to the IF mixing stage 982. The IF mixing stage 982 converts the analog baseband or low IF signals into RF signals based on a transmitter local oscillation 983 provided by local oscillation module 974. The power amplifier 984 amplifies the RF signals to produce outbound RF signals 998, which are filtered by the transmitter filter module 985. The antenna 986 transmits the outbound RF signals 998 to a targeted device such as a base station, an access point and/or another wireless communication device.

The radio 960 also receives inbound RF signals 988 via the antenna 986, which were transmitted by a base station, an access point, or another wireless communication device. The antenna 986 provides the inbound RF signals 988 to the receiver filter module 971 via the Tx/Rx switch 973, where the Rx filter 971 bandpass filters the inbound RF signals 988. The Rx filter 971 provides the filtered RF signals to low noise amplifier 972, which amplifies the signals 988 to produce an amplified inbound RF signals. The low noise amplifier 972 provides the amplified inbound RF signals to the IF mixing module 970, which directly converts the amplified inbound RF signals into an inbound low IF signals or baseband signals based on a receiver local oscillation 981 provided by local oscillation module 974. The down conversion module 970 provides the inbound low IF signals or baseband signals to the filtering/gain module 968. The high pass and low pass filter module 968 filters, based on settings provided by the channel bandwidth adjust module 987, the inbound low IF signals or the inbound baseband signals to produce filtered inbound signals.

The analog-to-digital converter 966 converts the filtered inbound signals from the analog domain to the digital domain to produce inbound baseband signals 990, where the inbound baseband signals 990 will be digital base-band signals or digital low IF signals, where the low IF typically will be in the frequency range of one hundred kHz to a few MHz. The digital receiver processing module 964, based on settings provided by the channel bandwidth adjust module 987, decodes, descrambles, demaps, and/or demodulates the inbound baseband signals 990 to recapture inbound data 992 in accordance with the particular wireless communication standard being implemented by radio 960. The host interface 962 provides the recaptured inbound data 992 to the host device 318 - 332 via the radio interface 954.

As one of average skill in the art will appreciate, the wireless communication device of the embodiment 900 of Figure 9 may be implemented using one or more integrated circuits. For example, the host device may be implemented on one integrated circuit, the digital receiver processing module 964, the digital transmitter processing module 976 and memory 975 may be implemented on a second integrated circuit, and the remaining components of the radio 960, less the antenna 986, may be implemented on a third integrated circuit. As an alternate example, the radio 960 may be implemented on a single integrated circuit. As yet another example, the processing module 950 of the host device and the digital receiver and transmitter processing modules 964 and 976 may be a common processing device implemented on a single integrated circuit. Further, the memory 952 and memory 975 may be implemented on a single integrated circuit and/or on the same integrated circuit as the common processing modules of processing module 950 and the digital receiver and transmitter processing module 964 and 976.

Any of the various embodiments of communication device that may be implemented within various communication systems can incorporate functionality to perform communication via more than one standard, protocol, or other predetermined means of communication. For example, a single communication device, designed in accordance with certain aspects of the invention, can include functionality to perform communication in accordance with a first protocol, a second protocol, and/or a third protocol, and so on. These various protocols may be WiMAX (Worldwide Interoperability for Microwave Access) protocol, a protocol that complies with a wireless local area network (WLAN/WiFi) (e.g., one of the IEEE (Institute of Electrical and Electronics Engineer) 802.11 protocols such as 802.11a, 802.11b, 802.11g, 802.11n, 802.11ac, etc.), a Bluetooth protocol, or any other predetermined means by which wireless communication may be effectuated.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "operably coupled to", "coupled to", and/or "coupling" includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" or "operably coupled to" indicates that an item includes one or more of power connections, input(s), output(s), etc., to perform, when activated, one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

As may also be used herein, the terms "processing module", "module", "processing circuit", and/or "processing unit" may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may have an associated memory and/or an integrated memory element, which may be a single memory device, a plurality of memory devices, and/or embedded circuitry of the processing module, module, processing circuit, and/or processing unit. Such a memory device may be a read-only memory, random access memory, volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network and/or a wide area network). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

Unless specifically stated to the contra, signals to, from, and/or between elements in a figure of any of the figures presented herein may be analog or digital, continuous time or discrete time, and single-ended or differential. For instance, if a signal path is shown as a single-ended path, it also represents a differential signal path. Similarly, if a signal path is shown as a differential path, it also represents a single-ended signal path. While one or more particular architectures are described herein, other architectures can likewise be implemented that use one or more data buses not expressly shown, direct connectivity between elements, and/or indirect coupling between other elements as recognized by one of average skill in the art.

The term "module" is used in the description of the various embodiments of the present invention. A module includes a functional block that is implemented via hardware to perform one or module functions such as the processing of one or more input signals to produce one or more output signals. The hardware that implements the module may itself operate in conjunction software, and/or firmware. As used herein, a module may contain one or more sub-modules that themselves are modules.

While particular combinations of various functions and features of the present invention have been expressly described herein, other combinations of these features and functions are likewise possible. The present invention is not limited by the particular examples disclosed herein and expressly incorporates these other combinations.

## Claims

1. A method for use in transmitting protected content from a media source communicatively coupled to a media sink via a packetized wireless link, the method comprising:
receiving, at a first wireless communication device, content to be delivered from a media source to a media sink under a digital rights management (DRM) scheme;
receiving, via the wireless link, information allowing the first wireless communication device to determine a DRM key associated with the media sink;
using the DRM key to generate DRM modified wireless encryption keys;
transmitting the content via the packetized wireless link using the DRM modified wireless encryption keys.

2. The method of claim 1, further comprising:
receiving the content at the first wireless communication device in plaintext.

3. The method of claim 1, further comprising:
receiving, from a second wireless communication device via the wireless link, communications encoded using the DRM modified wireless encryption keys;
decoding communications received from the second wireless communication device using the DRM modified wireless encryption keys.

4. The method of claim 3, further comprising:
transmitting decoded content to the media source in plaintext.

5. The method of claim 1, further comprising:
exchanging DRM keys belonging to an originating media source device and an endpoint sink device using an established wireless link between a first wireless device coupled to the originating media source device and a second wireless device.

6. The method of claim 1, wherein transmitting the content comprises:
employing advanced encryption standard (AES) encoding in conjunction with the DRM modified wireless encryption keys.

7. A wireless transceiver comprising:
an input to receive, from a content source, content to be delivered to a sink in accordance with a content protection scheme, wherein the content is received at the input in plaintext;
a wireless interface configured to receive from the sink, via a packetized wireless link, information related to a content protection key of the sink;
a memory;
a processor operably coupled to the memory and configured to:
use the information related to the content protection key of the sink to generate an encrypted version of the content for transmission over the packetized wireless link; and
the wireless interface further configured to transmit the encrypted version of the content over the packetized wireless link.

8. The wireless transceiver of claim 7, wherein the processor is further configured to:
determine whether content received from the source has been previously encrypted in accordance with the content protection scheme;
in response to a favorable determination, transmitting the content without applying further encryption.

9. The wireless transceiver of claim 7, wherein:
the wireless interface is further configured to receive, from another wireless transceiver, communications encrypted using wireless communication keys generated from the content protection key of the sink;
the processor is further configured to decoding the communications using wireless communication keys generated from the content protection key of the sink.

10. The wireless transceiver of claim 9, wherein the wireless transceiver comprises the content source.

11. The wireless transceiver of claim 9, wherein the wireless transceiver is a High Bandwidth Digital Content Protection (HDCP) compliant device, and is coupled to an external HDCP compliant content source.

12. The wireless transceiver of claim 7, wherein the processor is further configured to:
determine the content protection key of the sink;
determine whether the content protection key of the sink has been revoked; and
prevent transmission of the content to the sink in response to determining that the content protection key of the sink has been revoked.

13. The wireless transceiver of claim 7, the processor further configured to:
use the content protection key of the sink as a seed to generate modified wireless encryption keys.

14. A wireless transceiver configured for use in a packetized network, the wireless transceiver comprising:
a wireless interface configured to receive, from a wireless transceiver coupled to a media source:
information related to a digital rights management key (DRM) key; media content encrypted using wireless keys generated using information related to a DRM key;
a memory;
a processor operably coupled to the memory and configured to:
generate DRM-related wireless encryption keys using the information related to the
DRM key;
decrypt the media content using the DRM-related wireless encryption keys; and
an output to deliver decrypted media content to the media sink.

15. The wireless transceiver of claim 14, wherein the processor is further configured to:
determine whether the media content can be decrypted using the DRM-related wireless encryption keys to obtain plaintext content;
in response to a favorable determination, transmitting the plaintext content without applying further decryption; and
in response to an unfavorable determination, decrypting the media content using the DRM key.
